(19) Europäisches Patentamt / European Patent Office / Office européen des brevets

(11) **EP 4 707 732 A1**

(12) **EUROPEAN PATENT APPLICATION**

(43) Date of publication:
**11.03.2026 Bulletin 2026/11**

(21) Application number: **24275102.2**

(22) Date of filing: **05.09.2024**

(51) International Patent Classification (IPC):
**G01B 17/06** (2006.01)   **G01B 21/04** (2006.01)
**G01N 29/26** (2006.01)   **G01N 29/30** (2006.01)

(52) Cooperative Patent Classification (CPC):
**G01B 17/06; G01B 21/042; G01N 29/30;**
G01N 2291/044

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Renishaw plc**
**Wotton-under-Edge, Gloucestershire GL12 8JR (GB)**

(72) Inventor: **Wilson, David John**
**Gloucestershire, GL128JR (GB)**

(74) Representative: **Rolfe, Edward William et al**
**Patent Department**
**Renishaw plc**
**New Mills**
**Wotton-under-Edge**
**Gloucestershire GL12 8JR (GB)**

(54) **ULTRASOUND METHOD AND APPARATUS**

(57)    A method of calibrating a pulse-echo ultrasound probe having a coupling element for contacting an object, in which the pulse-echo ultrasound probe and an object are provided on a positioning apparatus having at least one axis about which the relative orientation of the pulse-echo ultrasound probe and the object can be changed, the method comprising:

i) at each of a plurality of different relative orientations between the pulse-echo ultrasound probe and the object about the at least one axis:

• the pulse-echo ultrasound probe generates an ultrasound pulse, and

• a measure is taken of an interface echo signal of the ultrasound pulse as received by the pulse-echo ultrasound probe, said interface echo signal being created by a reflection of the ultrasound pulse at the interface between the coupling element and the object; and

ii) using said measures of the interface echo signal to determine at least one calibration parameter, and recording the at least one calibration parameter for subsequent use.

Fig. 8

**Description**

The present invention relates to a method and an apparatus, in particular those involving ultrasound probes which can acquire ultrasound measurements of an object. In particular, the invention relates to a method of calibrating a pulse-echo ultrasound probe.

It is known to measure the dimensions of manufactured objects to ensure they conform to tolerance. In the case of high value components, such as aerospace turbine blades, the external form of an object can be measured to sub-micron accuracy using a surface contact probe mounted on a coordinate measuring machine (CMM). Examples of techniques for measuring the positions of multiple points on the surface of an object using a CMM equipped with a surface contact (e.g. scanning) probe are described in US5189806 and WO2009/024783.

In addition to surface measurements, it is often necessary to measure the internal and backwall features/structures of an object and/or identify internal faults. For example, turbine blades are typically hollow to enable them to be both lightweight and strong for operation at extreme temperatures and pressures. The internal inspection of such hollow turbine blades is typically carried out using an ultrasound inspection apparatus, such as a pulse-echo ultrasound probe.

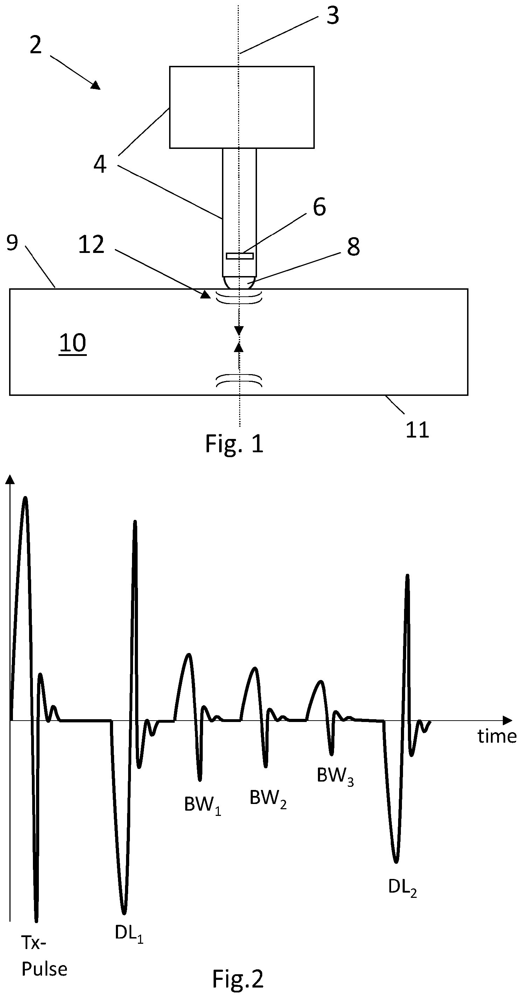

A pulse-echo ultrasound probe generates an ultrasound pulse which is projected into an object that the probe is in contact with. Echoes of the pulse (created by reflections of the pulse off surfaces/features of the object) are detected by the pulse-echo ultrasound probe. The time delay between echoes of the pulse can provide valuable information about the object. As explained in more detail below in connection with Figure 2, a pulse-echo ultrasound probe typically receives a number of echoes of its initial emitted pulse, including one or more "interface" echoes (labelled DL# in Figure 2) and one or more backwall echoes (labelled BW# in Figure 2). As will be understood, and as explained later on in this document, an "interface" echo is an echo created by reflection of the ultrasound pulse from the interface between the pulse-echo ultrasound probe and the surface object that it is in contact with (such a surface being referred to herein as the "front-wall" or "interface" surface), and a "backwall" echo is an echo created by reflection of the pulse-echo ultrasound pulse by a feature within or at the back of the object (accordingly, such echoes could logically be referred to as "internal or backwall echoes", but are referred to herein as "backwall echoes" for simplicity and brevity).

Some ultrasound probes (referred to as ultrasonic immersion systems) require submerging the test piece entirely within a water bath. A single pulse-echo transducer, or a pair of transmit/receive transducers, are appropriately positioned relative to the part using a computer controlled robotic arm. The water provides good acoustic coupling with the part but the arrangement is expensive and complex, especially for larger parts. An example of an ultrasonic immersion system is described in GB2440959.

Other ultrasound probes do not require the part to be immersed in water but instead typically rely on the localised application of a couplant material (e.g. a coupling gel or liquid) to the part. Such probes tend to be handheld, but it has been described previously how such probes may be mounted to the quill of a CMM. For example, US2009/0178482 describes an ultrasound probe mounted to the quill of a CMM. The ultrasound probe of US2009/0178482 includes a gimbal mount that allows the sensor to align with the surface normal of the object when contact with the object is established. As explained in paragraph 19 of US2009/0178482 a couplant material, such as a gel or grease, must be applied to the relevant areas of the object prior to inspection to ensure adequate acoustic coupling between the ultrasound probe and the object. The need to apply a localised couplant material, plus the limited angular range of the gimbal mount, makes ultrasound inspection of the internal properties of parts using such a system a time consuming and complex task. Handheld ultrasound thickness gauging probes that use a dry-couplant layer are also known, but the coupling efficiency and performance of such devices can be poor, especially when operation at higher ultrasound frequencies is required.

WO2016/051147 describes various configurations of ultrasound probes for mounting on a positioning apparatus such as a CMM. In particular, WO2016/051147 describes ultrasound probes comprising a deformable coupling element (in contrast to ultrasound probes having a hard/rigid coupling element). The deformable coupling element can provide both ultrasound coupling to the part and also act as a delay line. WO2016/051147 also describes that the coupling element can comprise a self-lubricating material which preferably releases a lubricant, such as water and/or oil, from its external surface in a controlled manner. The self-lubricating material may comprise an oleophilic elastomer, optionally a hydrophilic elastomer.

WO2020/174214 describes a method of calibrating an ultrasound probe, which comprises measuring backwall signals as received by the ultrasound probe at a plurality of different orientations between the ultrasound probe and a calibration artefact in order to find an axis of optimum signal of the ultrasound probe.

The present invention relates to improvements in methods for calibrating and using a pulse-echo ultrasound probe, and improvements in associated apparatus. For example, there is described herein a method of calibrating a pulse-echo ultrasound probe, in which the method comprises measuring an echo signal that was created by the reflection of sound from the interface between the ultrasound probe and an object (the "interface echo"), as received by the ultrasound probe, at a plurality of different orientations between the ultrasound probe and object in order to find an axis of optimum signal of the ultrasound probe.

According to a first aspect of the invention, there is provided a method of calibrating a pulse-echo ultrasound probe having a coupling element for engaging the surface of an object, in which the pulse-echo ultrasound probe and an object are provided on a positioning apparatus having at least one axis about which the relative orientation of the pulse-echo ultrasound probe and object can be changed. The method can comprise: i) at each of a plurality of different relative orientations between the pulse-echo ultrasound probe and an object about the at least one axis (at each of which the coupling element is in contact with the object):

- the pulse-echo ultrasound probe generates an ultrasound pulse, and
- a measure is taken of an interface echo signal of the ultrasound pulse as received by the pulse-echo ultrasound probe, said interface echo signal being created by a reflection of the ultrasound pulse at the interface between the coupling element and the object.

The method can further comprise: ii) using said measures of the interface echo signal (which were taken at said different orientations) (and which were created by a reflection of the ultrasound pulse at the interface between the coupling element and the object) to determine at least one calibration parameter for the pulse-echo ultrasound probe, and recording the at least one calibration parameter for subsequent use.

Determining and recording the at least one calibration parameter can mean that when the pulse-echo ultrasound probe is subsequently used to inspect an artefact, the calibration parameter can be used to help determine how to orient the pulse-echo ultrasound probe, e.g. in order to achieve a desired signal. Various particular advantages which can result from the present invention are described in more detail below.

It has been found that using a measure of an "interface" echo (i.e. an echo created by a reflection of the ultrasound pulse at the interface between the coupling element and the object) can be beneficial when calibrating the pulse-echo ultrasound probe, in particular because such an interface echo signal is not dependent on the internal and/or back wall configuration/form of the object. Although such interface echo signals are often created in the more complex near-field part of an ultrasound pulse (compared to the relatively cleaner signal of the far-field part of an ultrasound pulse), such interface echo signals have been found to be useful due to their independence of the internal/backwall structure of the object. Therefore, this can mean that the calibration can be performed even if the internal and/or backwall structure of the object is unknown, and therefore can even mean that the calibration method of the present invention can be performed on non-calibration objects, such as workpieces which are to be inspected.

Preferably, step i) and/or ii) is performed automatically. Accordingly, the method can comprise processing means, for example electronics, configured to effect the obtaining of measurements of step i), and/or to determine at least one calibration parameter (i.e. step ii)). Such processing means, for example electronics, can comprise hardwired electronics, a field-programmable gate array (FPGA), software running on a generic processor, or a combination thereof. The processing means, for example electronics, may or may not be a part of the positioning apparatus. For example, the positioning apparatus might comprise a controller for controlling the positioning apparatus. The controller could comprise the processing means/electronics. Optionally, a unit other than the controller comprises the processing means/electronics.

The calibration parameter can be recorded in electronic or non-electronic format. For example, the calibration parameter could be recorded in an electronic memory device, for example in electronically erasable programmable read only memory (EEPROM).

As will be understood, the calibration parameter can comprise a record, for example a data record. The calibration parameter can comprise at least one value.

The calibration parameter could be indicative of an axis of optimum signal of the pulse-echo ultrasound probe. As described in more detail below, the axis of optimum signal could be the pulse-echo ultrasound probe's ultrasound axis (e.g. L-wave axis). Alternatively, as described in more detail below, the axis of optimum signal could be an axis of the pulse-echo ultrasound probe (e.g. a mechanical/physical of the pulse-echo ultrasound probe) along which the pulse-echo ultrasound probe is to be oriented, e.g. during a subsequent part inspection using the pulse-echo ultrasound probe, e.g. to achieve a desired signal. Accordingly, with regard to this latter example, the calibration parameter could be an angle of orientation of the pulse-echo ultrasound probe about the at least one axis of the positioning apparatus (i.e. about which the relative orientation of the pulse-echo ultrasound probe and the object can be changed).

The calibration parameter could comprise a vector. As explained in more detail below, the positioning apparatus and the pulse-echo ultrasound probe can have their own, distinct coordinate spaces. In particular, the pulse-echo ultrasound probe's coordinate space could rotate relative to the positioning apparatus' coordinate space (e.g. about the at least one axis). The calibration parameter, for example the calibration vector, could be defined in the pulse-echo ultrasound probe's coordinate space. The calibration parameter could be described as a misalignment vector. As explained in more detail below, the calibration parameter could be a vector associated with an axis of optimal signal, for example, but not necessarily, with respect to a known calibration artefact.

The pulse-echo ultrasound probe can comprise at least one transducer for generating an ultrasound pulse. The pulse-echo ultrasound probe can comprise at least one transducer for sensing an echo signal of the ultrasound pulse.

Optionally, the pulse-echo ultrasound probe comprises the at least one transducer for generating an ultrasound pulse and the at least one transducer for sensing an ultrasound echo signal. Optionally, the at least one transducer for generating the ultrasound pulse is the same transducer that is used to sense the ultrasound echo signal. The at least one transducer may comprise a piezoelectric element. Preferably, the at least one transducer is configured to excite longitudinal sounds waves (L-waves). As mentioned above and as explained in more detail below, the at least one calibration parameter can be indicative of the pulse-echo ultrasound probe's ultrasound axis, for example, the L-wave axis. The pulse-echo ultrasound probe can comprise a single-channel probe. For example, the ultrasound probe could comprise just one active element/transducer performing pulse-echo operation. Optionally, the pulse-echo ultrasound probe could comprise a phased array probe. In this case, the misalignment measured could be compensated for in subsequent measurements within the probe using suitable beam-steering methods (e.g. inducing an appropriate phase/time delay between the array channels in order to steer the beam in the optimal L-wave axis).

The pulse-echo ultrasound probe may generate/excite and receive ultrasound in any known way. The ultrasound probe/inspection apparatus may operate at a high frequency. For example, the operating frequency may be greater than 5MHz, greater than 10MHz or more preferably greater than 15MHZ. In an example embodiment, the operating frequency is around 20MHz. Higher frequencies (e.g. such as those above 15MHZ) have been found to be particularly useful for probes with a deformable tip, and in particular have been found to provide higher resolution measurements. It has been found that at lower frequencies more noise can occur inside the deformable tip.

The invention is particularly advantageous with a pulse-echo ultrasound probe that has a deformable coupling element. In other words, the coupling element can be a soft coupling element (as opposed to a rigid/hard coupling element). Accordingly, the method can comprise loading the coupling element onto the surface of the object such that the coupling element is deformed out of shape. For example, the coupling element can comprise an elastomer. For example, the coupling element can comprise a polymer, for example a superabsorbent polymer.

The coupling element can be wet, e.g. with lubricant. Any appropriate lubricant can be used. Advantageously, the coupling element can comprise a self-lubricating material. A self-lubricating material preferably releases a lubricant, such as water and/or oil, from its external surface in a controlled manner. The self-lubricating material may comprise an oleophilic elastomer. Advantageously, the self-lubricating material comprises a hydrophilic elastomer. For example, the hydrophilic elastomer may comprise an incompressible gelatinous hydrophilic elastomer material such as a lightly cross-linked hydrophilic vinyl elastomer or a super absorbent polymer hydrogel, for example Sodium polyacrylate. An example of a high water content hydrophilic polymer chain compounds is MMA:VP (i.e. a Copolymer of N-vinyl pyrrolidone and methyl methacylate). For this compound, the water content can vary from about 35% to 95% and excellent acoustic properties are exhibited although the tear strength decreases as the water content is increased. Conveniently, the contact element/self-lubricating material is provided as a sphere. A preferred embodiment of the coupling element comprises at least one hydrophilic elastomer sphere.

As will be understood, the coupling element needs to be in contact/engaged with the surface (the "front-wall"/"interface" surface) of the object when performing an ultrasound measurement of an object. Step i) could comprise disengaging the coupling element in order to change the relative orientation of the pulse-echo ultrasound probe and object. However, preferably, step i) comprises changing the relative orientation of the ultrasound probe and the object whilst the ultrasound probe's coupling element remains in contact/engaged with the object. This can speed up the calibration process.

Preferably, the position of the pulse-echo ultrasound probe's coupling element on the surface of the object is substantially the same for each of the plurality of different relative orientations. Accordingly, there could be no lateral motion of the point of engagement (e.g. of the deformable tip of the pulse-echo ultrasound probe). This can speed up the calibration process. It can also provide a better calibration result and/or simplify the calibration procedure.

Different relative orientations between the pulse-echo ultrasound probe and the object can mean different "elevation angles" (or different "lean angles"/"angles of attack/"angle of incidence") of the pulse-echo ultrasound probe (with respect to the object's surface normal). In other words, different relative orientations of the pulse-echo ultrasound probe and object could mean different angles between the pulse-echo ultrasound probe's axis (e.g. it's mechanical axis and/or ultrasound axis, for instance L-wave axis) and the surface normal of the object. Different relative orientations between the pulse-echo ultrasound probe and the object can mean different "azimuth angles" or different "directions of attack" of the probe (and does not necessarily result in a change in the "elevation angle") (with respect to the object's surface normal). Optionally, different relative orientations between the pulse-echo ultrasound probe and the object mean different "elevation" and "azimuth" angles of the pulse-echo ultrasound probe relative to the surface of the obj ect.

The plurality of different orientations of step i) can be configured such that measures of interface echo signals are obtained with the pulse-echo ultrasound probe and the object at different rotational relative orientations about two (for example, imaginary) (for example, perpendicular) axes which extend through and perpendicular to the surface normal of the object at the point of contact between the pulse-echo ultrasound probe and object. For example, the different relative orientations of step i) can be achieved by changing the orientation of the pulse-echo ultrasound probe relative to the object (e.g. moving/rolling the ultrasound probe) about two (e.g. imaginary) (e.g. perpendicular) axes which extend through the point of contact between the pulse-echo ultrasound probe and object, and perpendicular to the surface normal of the object at the point of contact between the pulse-echo ultrasound probe and object. This can enable data (e.g. pulse-echo or interface echo energy information) in more than one dimension (with respect to the pulse-echo ultrasound probe) to be obtained. For example, information about an axis of optimum signal can be determined for more than one degree of freedom/dimension with respect to the pulse-echo ultrasound probe.

As explained in more detail below, the positioning apparatus can comprise at least one axis, for example at least two axes, about which the relative orientation of the pulse-echo ultrasound probe and object can be changed. Step i) can comprise: at each of a plurality of different relative orientations between the pulse-echo ultrasound probe and the object about at least one axis (for example about at least one of the at least two axes) (at each of which the coupling element is in contact with the object):

- the pulse-echo ultrasound probe generates an ultrasound pulse, and
- a measure is taken of an echo of the ultrasound pulse as received by the pulse-echo ultrasound probe, said echo being created by a reflection of the ultrasound pulse at the interface between the coupling element and the obj ect.

Optionally, step i) comprises: at each of a plurality of different relative orientations between the pulse-echo ultrasound probe and the object about at least two of the at least two axes (at each of which the coupling element is in contact with the object):

- the pulse-echo ultrasound probe generates an ultrasound pulse, and
- a measure is taken of an echo of the ultrasound pulse as received by the pulse-echo ultrasound probe, said echo being created by a reflection of the ultrasound pulse at the interface between the coupling element and the obj ect.

In other words, the positioning apparatus can comprise at least a first and optionally at least a second axis about which the relative orientation of the pulse-echo ultrasound probe and object can be changed. The method can comprise the pulse-echo ultrasound probe obtaining measures of interface echo signals of the ultrasound pulse as received by the pulse-echo ultrasound probe at a plurality of different combinations of angular orientations of the first and second axes. Accordingly, the method can comprise changing the relative orientation about the first axis, and optionally also changing the relative orientation about the second axis (between measurements). This can enable data (e.g. echo energy information) in more than one dimension (with respect to the probe) to be obtained. For instance, performing an orbital motion (referred to below) can comprise changing the orientation about both first and second axes.

The pulse-echo ultrasound probe can comprise a body portion distal the coupling element. In other words, the pulse-echo ultrasound probe can comprise a body portion at a first end, and the coupling element at the second end. The pulse-echo ultrasound probe can be mounted to the positioning apparatus via the body portion. The pulse-echo ultrasound probe (for example the body portion) and the positioning apparatus (for example, the articulated member/rotary head) can comprise corresponding mounting features for enabling the pulse-echo ultrasound probe to be mounted to the positioning apparatus, in particular which enable the pulse-echo ultrasound probe to be automatically loaded and unloaded on and off the positioning apparatus. In other words, preferably, the pulse-echo ultrasound probe is auto-changeable on the positioning apparatus, e.g. to/from a rack located in the positioning apparatus' operating volume. The pulse-echo ultrasound probe (for example the body portion) and positioning apparatus can comprise complementary features of repeatable mount, for example complementary features of a kinematic mount. At least one of the pulse-echo ultrasound probe and positioning apparatus can comprise at least one magnet for retaining the pulse-echo ultrasound probe on the positioning apparatus.

Step i) can comprise moving the body portion of the pulse-echo ultrasound probe about the point at which the coupling element contacts/engages the object (e.g. contacts engages the "front-wall surface" of the object - which as mentioned above and below can also be referred to as the "interface surface" of the object), to cause a change in the relative orientation (and for example, in which the point at which the coupling element contacts/engages the object is fixed during such motion). The interface echo signal (created by a reflection of the ultrasound pulse at the interface between the coupling element and the object) as received by the pulse-echo ultrasound probe can be measured at different positions of the main body, e.g. whilst the body portion is being moved about the point at which the coupling element contacts/engages the object. Step i) can comprise causing the body portion to orbit about the point at which the coupling element contacts/engages the object. Such a motion could be referred to as an orbital motion. The orbital motion may or may not be a complete orbit (e.g. the body portion might only partially complete an orbit about the point at which the coupling element contacts/engages the object, a "partial orbit"). The angle of the orbit (e.g. the angle between the pulse-echo ultrasound probe's mechanical axis and the surface normal of the object, in other words the "lean" or "elevation" angle) could remain constant during an orbital motion.

Step i) might comprise performing a plurality of orbital motions (in other words, a plurality of complete or partial orbits). A plurality of nominally identical orbital motions could be performed. For example, step i) could comprise performing the same orbital motion more than once (e.g. in order to gather multiple signals for the same angle of orbit, for instance so as to obtain an averaged signal). Step i) could comprise performing a plurality of orbital motions, in which the angle of orbit (in other words, the ultrasound probe's "elevation", "lean" or "incidence" angle) is different for different orbits.

The angle of the orbit could change in a step-wise manner between different orbits, or optionally could change continuously (e.g. in a spiralling manner). Accordingly, an orbital motion could cause the pulse-echo ultrasound probe (e.g. its axis, such as its mechanical axis and/or ultrasound axis) to describe a conical shape. Likewise, a set of orbital motions could cause the pulse-echo ultrasound probe to describe a set of conical shapes (or a spiralling conical shape if the angle of the orbit changes continuously). Advantageously, an orbital motion could be caused/performed by the synchronous relative motion of the pulse-echo ultrasound probe and the object about at least two axes. For example, in the case of the pulse-echo ultrasound probe being mounted on an articulated head comprising two axes, an orbital motion could be caused/performed by continuous, back-and-forth rotation about both of the two axes, which are synchronised with each other and with motion of the positioning apparatus which causes the articulated head to describe a circular motion.

The method can comprise recording at least one array of measures of (e.g. data related to) the interface echo signal received by the pulse-echo ultrasound probe. The array could be a one-dimensional array, a two-dimensional array, or three-dimensional array. The elements in an array could comprise data associated with the interface echo signal received by the pulse-echo ultrasound probe for a given/particular relative orientation (of the ultrasound probe and object). The elements in an array could comprise data related to the signal strength/quality of the interface echo signal. For example, the elements in an array can comprise data associated with any signal metric related to at least one of the amplitude, the duration, the time-of arrival, or the time-integrated energy of an interface echo signal. For example, the elements in an array could comprise a value indicative of the peak signal (e.g. peak interface echo energy) received by the ultrasound probe at particular relative orientation. In particular, for example, the elements in an array could comprise a value indicative of the peak of the envelope of the interface echo signal (e.g. the envelope given by a Hilbert transform or any other signal demodulation method).

Preferably, the interface echo signal is the first-received interface echo signal, i.e. the $DL_1$ echo of Figure 2.

Preferably the measure of an echo created by a reflection of the ultrasound pulse at the interface between the coupling element and the object is the only echo measurement used in the determination of calibration parameter. In other words, backwall echoes are not used in the determination of calibration parameter. This can avoid the need to know any information about the internal and/or backwall configuration of the object. Accordingly, this can simplify the process for determining the calibration parameter, and/or improve the accuracy thereof.

Preferably, the measure of the first-received echo created a reflection of the ultrasound pulse at the interface between the coupling element and the object is the only echo measurement used in the determination of calibration parameter. In other words, preferably no backwall echo signals and no interface echo signals other than the first-received interface echo signal are used the determination of calibration parameter (i.e. the DL2, DL3, etc echoes are not used). Again, this this can simplify the process for determining the calibration parameter, and/or improve the accuracy thereof. In particular, with regard to secondary and subsequent interface echo signals, these can be significantly distorted and difficult to extract consistent information therefrom. Accordingly, whilst interface echo signals other than the first-received interface echo signal could be measured and used instead of or as well as the first-received interface echo signal, it has been found that using the first-received interface echo signal (and preferably just/only the first-received interface echo signal) can provide a superior, more accurate, calibration parameter, e.g. a more accurate determination of an axis of optimum signal (e.g. a superior, more accurate, determination of the ultrasound/L-wave axis).

The elements in the array could comprise a value determined from a plurality of measures of interface echo signals (at a particular relative orientation). For instance, the elements in the array could comprise an averaged value. For example, the elements in the array could comprise a value representative of an average peak signal of an interface echo signal, (e.g. obtained for a given relative orientation, over at least two readings) (at a particular relative orientation). As will be understood, such averaging could be performed by dwelling at a particular orientation and taking multiple readings. Optionally, such averaging could be achieved by continuously moving the pulse-echo ultrasound probe through the different orientations (in other words continuously changing the orientation of the ultrasound probe about the at least one axis) whilst taking measurements as the pulse-echo ultrasound probe is moving/changing orientation, and moving through the same orientation more than once (e.g. by performing repeated orbital motions). As explained in more detail below, in such a case, a measurement/reading taken as the pulse-echo ultrasound probe is moving could be allocated to a particular bin depending on the orientation at the point the measurement/reading was taken. In this case, it might be that different bins have different numbers of measurements/readings, because its measurements/readings are not necessarily taken at set orientations. Accordingly, the method could comprise keeping a record of the number of times a measurement/reading has been added to a bin. Such a value can then be used to determine an average measurement/reading.

The array could be referred to as a series, or map (e.g. coordinate map, for instance polar coordinate map). Accordingly, the method can comprise determining an array/series/map of interface echo signals received by the ultrasound probe with respect to the relative orientation between the ultrasound probe and the object. For example, the array could be described as an interface echo signal energy array/series/map, in particular an interface echo signal energy distribution array/series/map. The array could comprise a coordinate map, for example a polar coordinate map. Optionally, the array comprises a look-up table or other appropriate data record.

The method can comprise obtaining an initial calibration parameter (e.g. which provides an initial indication of the axis of optimum signal). The method can comprise, subsequently controlling the pulse-echo ultrasound probe (e.g. on the basis of the initial indication of the axis of optimum signal) to obtain more measures of interface echo signals and determining a refined calibration parameter (e.g. a refined indication of the axis of optimum signal). In other words, the method can comprise using the initial calibration parameter to determine how to control the relative orientation of the pulse-echo ultrasound probe and an object in order to obtain a refined calibration parameter (e.g. refined indication of the axis of optimum signal, e.g. refined indication of the probe's ultrasound axis). Accordingly, the at least one calibration parameter can comprise/be based on the refined indication of the axis of optimum signal. For example, obtaining an initial calibration parameter can comprise obtaining a first set of measures of interface echo signals from a first set of (e.g. orbital) motions, and then determining a refined calibration parameter (e.g. determining a refined indication of the axis of optimum signal) can comprise obtaining a second set of measures of interface echo signals from a second set of (e.g. orbital) motions, in which the resolution of the angles at which measurements are taken is smaller for the second set of motions than that of the first set of motions (e.g. in which the difference in orbit (e.g. elevation/lean) angles is smaller for the second set of orbital motions than that of the first set of orbital motions).

As described in detail below, the at least one calibration parameter can be indicative of the pulse-echo ultrasound probe's longitudinal wave ("L-wave") axis.

Determining the at least one calibration parameter can comprise using known information about the object. Determining the at least one calibration parameter can comprise using known information about the orientation and/or geometry of the object. For example, the known information can comprise information about (e.g. direction of) the surface normal at the point/location of measurement (in other words, the surface normal at the point the pulse-echo ultrasound probe is in contact with the object). The object can comprise a planar "front-wall"/"interface" surface. The plane of the ("front-wall" or "interface") surface of the object which the pulse-echo ultrasound probe is in contact with can be known. This can make it easier to know/determine the surface normal, but this doesn't necessarily have to be the case.

Knowing information about the object such as its surface normal at the point/location of measurement can be beneficial, especially if it is desired to determine the ultrasound axis of the pulse-echo ultrasound probe. However, it is not essential to know such information, and at least one useful calibration parameter can be determined from performing the method of the invention on an unknown object. For instance, the method of the invention can be performed on an unknown planar surface (e.g. unknown in orientation/having an unknown surface normal) to determine a calibration parameter. For example, such a calibration parameter determined using an unknown object could describe the orientation of the pulse-echo ultrasound probe relative to the object at which an optimum interface echo signal is obtained. For example, at the orientation at which the optimum signal is received, it could be assumed that the ultrasound axis is aligned with the surface normal of the object at the location of measurement, even if both the actual ultrasound axis of the probe and the surface normal are unknown. This information/calibration parameter can used to determine how to orient the probe for subsequent measurements on the same planar surface at different locations (or other surfaces which are assumed to have the same surface normal direction). For example, the pulse-echo ultrasound probe can be oriented in the same way for subsequent measurements and it can be assumed that the pulse-echo ultrasound probe's ultrasound axis will be aligned with the surface normal the object.

With the present invention, the internal form/structure and/or form/structure of the backwall of the object need not be known.

Optionally, the object is metallic.

The method can comprise measuring the object to determine its position, orientation, form and/or plane of at least the front-wall/interface surface (which the pulse-echo ultrasound probe contacts during the process of the present invention). For example, the method can comprise a position measurement probe taking measurements of at least the front-wall/interface surface of the object. Optionally, the arrangement/form/configuration of the front-wall is already known. Accordingly, the method could comprise taking measurements of the object (e.g. of the front-wall/interface surface) in order to determine the orientation of the object/the orientation of the (e.g. plane of) the front-wall/interface surface. Measurements can be obtained using a contact probe, for example a touch-trigger probe, or contact analogue/scanning probe. As will be understood, the position measurement probe can be calibrated, accordingly the method could comprise calibrating the position measurement probe.

The method can comprise using the calibration parameter. For example, the method can comprise using the calibration parameter to determine how to orient the pulse-echo ultrasound probe and/or an object to be inspected in a subsequent inspection. The object to be inspected in a subsequent inspection can be an object other than the object used to determine the calibration parameter (or could be the same object). The method can comprise using the calibration parameter to determine how to orient the pulse-echo ultrasound probe and/or object to be inspected such that ultrasound waves (e.g. L-waves) propagate along a desired propagation vector within the object to be inspected. The method can comprise taking into consideration the effect of refraction/Snells law to determine how to orient the pulse-echo ultrasound probe and/or object to be inspected. The method can further comprise, for a given point on an object to be inspected, determining a desired inspection axis/vector (in other words a "target vector"). The method can comprise using the at least one calibration parameter to determine a desired relative orientation of the pulse-echo ultrasound probe and object to be inspected, e.g. such that the axis of optimum signal and desired inspection axis (e.g. target vector) are arranged in accordance with predetermined criteria. The predetermined criteria could be that the axis of optimum signal and desired inspection axis (e.g. target vector) are substantially aligned.

The amplitude of the first-received interface echo signal might be significantly different (e.g. significantly larger) compared to other echo signals as received by the pulse-echo ultrasound probe, the method can comprise changing the gain of the pulse-echo ultrasound probe between the calibration process and an object-inspection process, such that during the calibration of the pulse-echo ultrasound probe the gain is selected so as to ensure that at least the first-received interface echo signal is not over-saturated, but such that during a subsequent object-inspection in which backwall echo signals are used to determine information about the object, the gain is changed (e.g. increased) compared to its value during the calibration process, so as to increase the amplitude of the backwall echo signals (at the expense of (potentially) over-saturating at least the first-received interface echo signal). Accordingly, the calibration method of the invention can comprise selecting a gain so as to avoid over-saturation of at least the measure of the first-received interface echo signal. Additionally, the method can comprise, changing (e.g. increasing) the gain of the pulse-echo ultrasound probe such that the gain used during a subsequent process during which an object is inspected (and in which the calibration parameter is used to determine how to orient the pulse-echo ultrasound probe and/or an object to be inspected) is different (e.g. greater than) that used during the calibration method.

The method can comprise bringing the pulse-echo ultrasound probe into contact/engagement with an object to be inspected, in accordance with the desired relative orientation of the pulse-echo ultrasound probe and object to be inspected (e.g. such that the axis of optimum signal and the desired inspection axis are arranged in accordance with the aforementioned predetermined criteria). For example, the method can comprise bringing the pulse-echo ultrasound probe coupling element into contact/engagement with said point on the object to be inspected, in accordance with the desired relative orientation of the pulse-echo ultrasound probe and object to be inspected. The method optionally comprises subsequently changing the relative orientation of the pulse-echo ultrasound probe and object to be inspected about the at least one axis (and optionally about at least two axes) to determine if a more optimum (interface and/or internal/back wall) echo signal can be found at a different orientation. Such a process could be referred to as a discovery-mode search. Such a process could comprise taking into consideration refraction/Snells law to determine how to conduct the search. With a pulse-echo ultrasound probe that has been calibrated according to the invention, the search can be more targeted than if the probe were not calibrated, thereby providing a speed benefit.

In connection with the previous paragraph, once the pulse-echo ultrasound probe has been brought into contact/engagement with the object to be inspected at the desired relative orientation the method can comprise taking a pulse-echo measurement of the object, e.g. which can comprise the pulse-echo ultrasound probe generating an ultrasound pulse, and taking a measure of one or more of the echo signals (e.g. at least one of the echo signals created by an internal and/or back wall feature of the object).

The positioning apparatus can comprise a coordinate positioning apparatus. The coordinate positioning apparatus may include a machine tool, a robot, an arm, an x-y scanner or a crawler. In a preferred embodiment, the coordinate positioning apparatus comprises a coordinate measuring machine. The CMM may be a Cartesian (e.g. bridge type) of CMM or a non-Cartesian (e.g. hexapod) type of CMM.

The pulse-echo ultrasound probe could be mounted on an articulated member, comprising the at least one axis. The articulated member could be a continuously articulated member. Optionally, the articulated member comprises an indexed articulated member (e.g. the articulated member comprises a set number of discrete orientations at which the articulated member can be locked). The articulated member can comprise at least one motor for controlling the orientation of the pulse-echo ultrasound probe about the at least one axis.

The articulated member could comprise a rotary head, for example mounted on the positioning apparatus, e.g. on a CMM, for instance on the end of the quill (also known as the Z-column) of a CMM. Accordingly, as per the above, the rotary head may comprise a single rotary axis, two rotary axes or three rotary axes. The rotary head advantageously comprises at least two rotary axes. The rotary head may comprise at least three rotary axes.

According to another aspect of the invention, there is provided an apparatus comprising: a pulse-echo ultrasound probe mounted on a positioning apparatus, and a controller, in which the configured to control the apparatus in accordance with any of the above-described methods and/or configured to analyse signals/measurements from a pulse-echo ultrasound probe in accordance with any of the above-described methods.

According to another aspect of the invention there is provided computer program code comprising instructions configured to control an inspection apparatus to perform any of the above-described methods. According to another aspect of the invention there is provided computer program code comprising instructions configured to analyse signals/measurements from an ultrasound probe in accordance with any of the above-described methods. For instance, according to another aspect of the invention there is provided computer program code comprising instructions configured to determine, from a measure of an interface echo signal obtained by an ultrasound probe at a plurality of different relative orientations between the ultrasound probe and an object (said interface echo signal being created by a reflection of the ultrasound pulse at the interface between the coupling element and the object), at least one calibration parameter. The computer program code can comprise instructions configured to record the at least one calibration parameter for subsequent use. According to another aspect of the invention there is provided a computer readable medium comprising computer program code as described above.

Embodiments of the invention will now be described, by way of example only, with reference to the following drawings in which:

Figure 1 schematically illustrates the fundamental operating principles of an example ultrasound probe;

Figure 2 illustrates the principle of ultrasound thickness measurement;

Figure 3 illustrates an ultrasound probe mounted on a coordinate measuring machine (CMM);

Figure 4 illustrates the different mechanical parts of an ultrasound probe;

Figure 5 illustrates the different electrical modules of an ultrasound probe;

Figure 6 illustrates how the difference between assumed and calibrated L-wave axis of an ultrasound probe can affect the propagation of the L-wave in a part;

Figure 7 illustrates an example flow chart of a process for calibrating the ultrasound probe can be calibrated;

Figure 8 illustrates an orbital motion;

Figure 9 shows a set of cones illustrating a set of orbital motions, along with an associated 2D energy bin map;

Figure 10 shows the 2D energy bin map of Figure 9 in isolation;

Figure 11a shows a polar coordinate map of the backwall energy distribution for an uncalibrated probe;

Figure 11b shows a polar coordinate map of the backwall energy distribution for a calibrated probe, measured about the calibrated L-wave axis which is aligned to the surface normal of an object; and

Figures 12a to 12d illustrate how the ultrasound probe can be oriented so as to ensure that the L-wave axis is aligned with a target vector.

The fundamental operating principles of an example pulse-echo ultrasound probe will be explained with reference to Figures 1 and 2. Figure 1 shows a pulse-echo ultrasound probe 2 that comprises an outer body 4. A longitudinal wave ("L-wave") transducer is provided that comprises a piezoelectric element 6 and a deformable coupling element 8. As will be understood, other commonly employed components within the pulse-echo ultrasound probe, such as the backing layer and matching layer (wave-plate), can form part of the pulse-echo ultrasound probe, but which for simplicity are not shown in Figure 1. To measure the thickness of an object 10, the probe 2 and/or object 10 are moved so as to bring the deformable coupling element 8 into contact/engagement with the front surface of the object 10. When an excitation pulse is applied across the piezoelectric element 6, an ultrasound pulse 12 is projected into the object 10. As schematically illustrated, this ultrasound pulse 12 is reflected by the back wall of the object, this reflected beam is sensed by the ultrasound probe (e.g. via the piezoelectric element 6). This process can be referred to as a pulse-echo measurement, or more colloquially as "pinging". As will be understood, a thickness measurement estimation can be made using a time-of-flight or time-delay measurement of the projected ultrasound waveform.

Figure 2 is an example of the ultrasound waveform received by the transducer's active piezoelectric element 6 in response to a transient high voltage excitation pulse being applied across the piezoelectric element 6. This time-domain waveform, referred to as an "A-scan" plot, is more often a time averaged response from a train of such excitation pulses (e.g. a sequence of N pulses where N may be in the range of 16-32) in order to suppress random uncorrelated electronic noise.

The initial excitation pulse generated by the piezoelectric element 6 is labelled as the "Tx-Pulse" in Figure 2. This initial excitation pulse causes the inspection L-wave to propagate into the coupling element 8 (which acts as a delay line) and travel along at the speed of sound in the coupling element material ($C_L$). The first reflection peak (DL1) received back at the piezoelectric element 6 arises from reflection of sound from the interface between the coupling element 8 and the object 10. This reflection from the interface between the coupling element 8 and the object 10 (i.e. the DL1 echo, also referred to herein as the "interface echo signal") can be seen to occur at a time well after the initial transmit pulse (Tx-pulse) has completely receded.

Although some ultrasound is reflected back at the delay line interface and never enters the object 10, a sufficient proportion of ultrasound does transmit into the object 10 as a measurable inspection pulse from which subsequent thickness measurements can be made. The speed of sound in the deformable coupling element 8 can be low compared to the speed of sound within the object 10, and so especially if the object is relatively thin, multiple echoes/reflections between the back wall of the part 10 can occur before a second interface echo signal (the DL2 echo) from the delay line/coupling element 8 is registered at the transducer. These backwall echoes/reflections thus provide the pulses BW1, BW2, and BW3 that can also be seen in the "A-scan" plot of Figure 2. The time window observed within the A-scan between the first and second interface echo signals (the DL1 and DL2 echoes) is thus the probe's primary measurement window.

The thickness of the object 10 may be calculated from A-scan data of the type shown in Figure 2 in several ways. In practice, such thickness measurements typically involve one of three modes of operation from which the time delay information can be extracted from the measured A-scan. These different modes are typically termed Mode-1, Mode-2 and Mode-3 respectively. In Mode-1 gauging, the time delay measurement is made between the excitation pulse (t=0) and the first received backwall reflection (BW1) from the object 10. In Mode-2 gauging, the time delay measurement is made between the first-received interface echo signal (DL1) and the first-received back wall reflection (BW1). In Mode-3 gauging, the time delay measurement is made between two or more successive back wall reflections (e.g. between BW1 and BW2). Mode-3 is most effective where clean high SNR multiple back wall echoes can be observed, suggesting it is most practical in low attenuation high acoustic impedance parts such as fine-grain metals, glass or ceramics. Mode-3 also has the advantage that it does not rely on the absolute time of arrival of back wall or interface echo signals, thus negating the effects of variability in the coupling and delay lines of different coupling modules. Mode-3 also allows parts to be measured that comprise outer coating layers. Any suitable mode (e.g. Mode-1, Mode-2 or Mode-3) could be used as necessary. As will be understood, the below described example calibration technique extracts signal information from the A-scan measurement window, but does not necessarily involve performing a thickness measurement (e.g. a calculation of thickness).

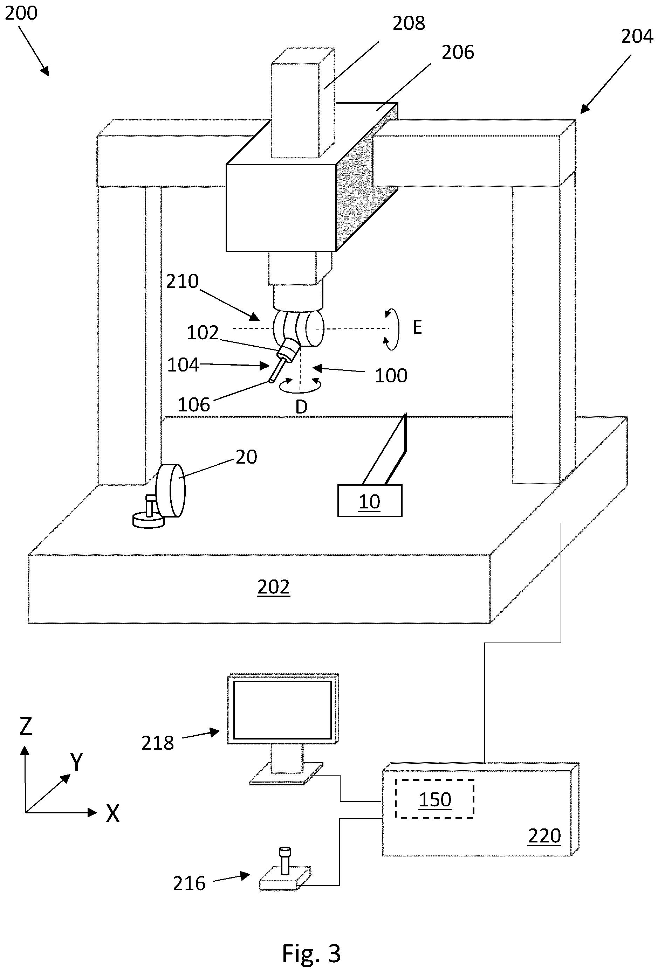

With reference to Figure 3 there is shown a pulse-echo ultrasound probe 100 mounted on a positioning apparatus 200. In the embodiment described, the pulse-echo ultrasound probe 100 is the same as the pulse-echo ultrasound probe 2 described above in connection with Figures 1 and 2. The positioning apparatus comprises a movement structure, in this case in the form of a coordinate measuring machine ("CMM"). The CMM 200 comprises a base 202, supporting a frame 204 which in turn holds a carriage 206 which in turn holds a quill 208 (or "Z-column"). Motors (not shown) are provided to move the quill 208 along the three mutually orthogonal axes X, Y and Z (e.g. by moving the frame along the Y axis, and the carriage 206 along the X axis, and the quill 208 along the Z-axis).

The quill 208 holds an articulated head 210, which could be an indexing head or a continuous head, but preferably is a continuous head (e.g. a REVO® head available from Renishaw plc). As will be understood, a continuous head enables orientation of a device (e.g. a measurement device, such as a pulse-echo ultrasound probe) mounted on it at substantially any angle about at least one axis and are often described as providing a near infinite number of angular orientations. Also, if desired, the orientation of a measurement device about an axis of a continuous head can be changed during measurement (e.g. whilst a contact probe is in contact with an object being inspected and acquiring measurement information). In contrast, an indexing head has a discrete number of defined ("indexed") positions at which the device mounted on it can be locked. Accordingly, for example, with an indexing head, the orientation of the measurement device can be changed, but not during the acquisition of measurement data.

In this embodiment, the articulated head 210 facilitates rotation of the pulse-echo ultrasound probe 100 mounted on it, about first and second rotational axes D, E via appropriate bearings and motors (not shown).

The combination of the two rotational axes (D, E) provided by the articulated head 210 and the three linear (X, Y, Z) axes of translation of the CMM 200 allows the pulse-echo ultrasound probe 100 to be moved/positioned in five degrees of freedom (two rotational degrees of freedom, and three linear degrees of freedom).

Further, although not shown, measurement encoders may be provided for measuring the relative positions of the base 202, frame 204, carriage 206, quill 208 and the parts of the articulated head 210 so that the position of the pulse-echo ultrasound probe 100 relative to a workpiece 10 located on the base 202 can be determined.

A controller 220 is provided for controlling the operation of the CMM 200, such as controlling the position and orientation of the pulse-echo ultrasound probe within the CMM volume (either manually, e.g. via an input device such as joystick 216, or automatically, e.g. under the control of an inspection program) and for receiving information (e.g. measurement information) from the CMM 200. A display device 218 can be provided for aiding user interaction with the controller 220. The controller 220 could, for example, be a dedicated electronic control system and/or may comprise a personal computer.

As shown, a probe interface 150 (for facilitating communication with the pulse-echo ultrasound probe 100) can be provided in the controller 320, for example.

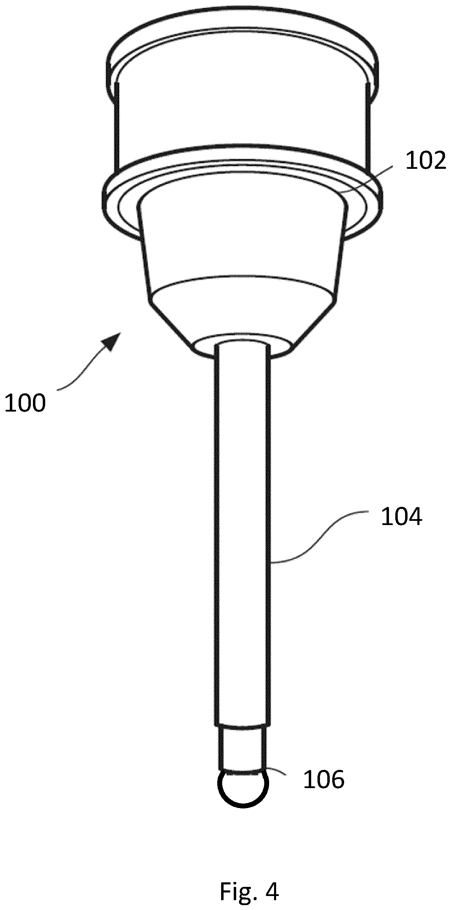

The present invention is suitable for use with a range of different types of pulse-echo ultrasound probe. WO2016/051147 and WO2016/051148 describe various types of pulse-echo ultrasound probe which the invention can be used with. For the sake of illustration, one particular type of pulse-echo ultrasound probe 100 will now be described in more detail in connection with Figure 4. The ultrasound probe 100 shown in Figure 4 is arranged for attachment to a two-axis rotary head. It would, of course, be possible to attach such a pulse-echo ultrasound probe to other positioning/measurement systems, for example a robot arm.

The pulse-echo ultrasound probe 100 comprises a base module that includes a main body portion 102, which is provided at the proximal end of the pulse-echo ultrasound probe 100 that attaches to the CMM. The main body 102 can contain electronics required to power the pulse-echo ultrasound probe and communicate control data and activation commands to the pulse-echo ultrasound probe (e.g. to schedule ultrasonic measurements). Power and/or control data, including ultrasonic data and thickness measurement results, may be passed through the rotary head communication channels and/or wirelessly. Rather than power being provided via the CMM, power could be provided by a battery located in the main body portion 102, for example.

An elongate tube 104 (e.g. a rigid carbon-fibre tube) extends from the main body 102, along the probe's axial length. A coupling element 106, in particular a deformable coupling element, is located at the end of the tube 104 distal the main body 102. In the embodiment described, the deformable coupling element 106 comprises a hydrophilic elastomer. Optionally, the deformable coupling element 106 is replaceable (e.g. could be attached via a screw or snap-fit). At least the portion of the coupling element 106 which protrudes from the tube 104 is spherical. As will be understood, the deformable coupling element may engage a wear plate of the transducer in the probe, and the deformable coupling element 106 may act as both the coupling element and a delay line. The deformable coupling element 106 can be soft and elastic so as to easily conform to the surface of the object 10 it contacts/engages.

In use, the pulse-echo ultrasound probe 100 is moved by the CMM 200 so as to bring the deformable coupling element 106 into contact with the object 10, thereby forming an acoustic coupling with the object. The surface of the object 10 that the deformable coupling element 106 is brought into contact with can be referred to herein as the "front-wall" surface or the "interface" surface. The pulse-echo ultrasound probe 100 generates one or more ultrasound pulses (for example, via a piezo-electric element) which are imparted into the object 10, and reflected by the front-wall/interface surface and back wall of the object 10. The reflected ultrasound waves (the echoes) are sensed by the pulse-echo ultrasound probe, and analysed, e.g. to determine the distance of the back wall from the front-wall/interface surface of the object 10 (e.g. to determine the thickness of the object 10).

The pulse-echo ultrasound inspection probe may excite and receive ultrasound in any known way. The pulse-echo ultrasound probe may operate at a high frequency. For example, the operating frequency may be greater than 5MHz, greater than 10MHz or more preferably greater than 15MHZ. In a preferred embodiment, the operating frequency is around 20MHz. The transducer, which may comprise a piezoelectric element, preferably excites longitudinal sounds waves (L-waves).

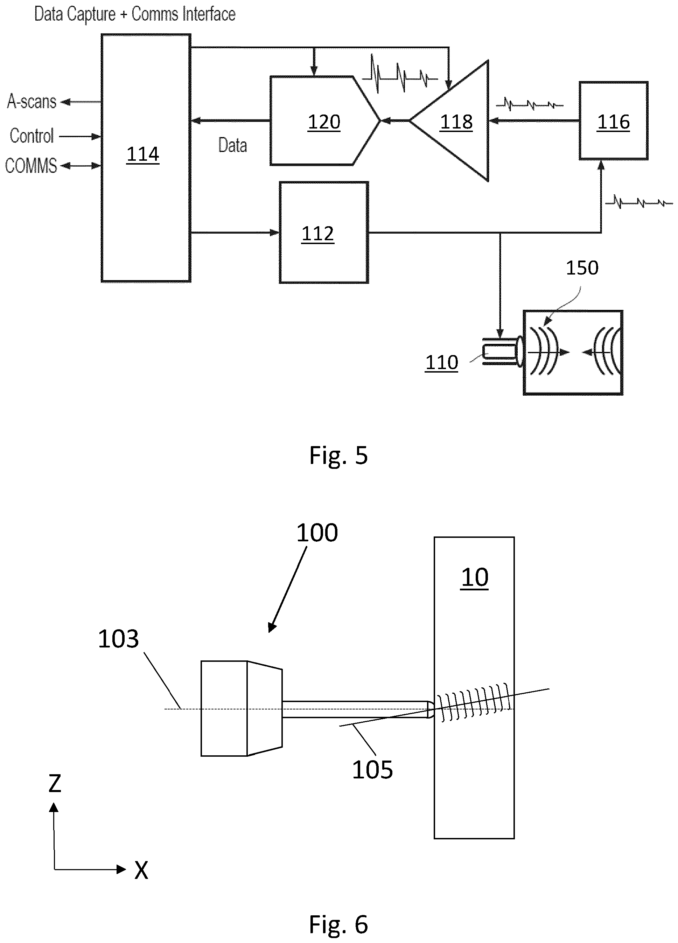

Figure 5 schematically illustrates an example embodiment of the analogue and digital electronic modules that can be provided with (e.g. within) the pulse-echo ultrasound probe 100. As schematically shown, the pulse-echo ultrasound probe comprises an ultrasound transducer 110, for example a pulse-echo ultrasonic transducer that includes a piezo-electric element for transmitting high frequency time-discrete longitudinal waveforms (hereinafter termed "L-waves"), when driven by a train of high-voltage impulsive excitation pulses; e.g. negative going transition (NGT) pulses between 50-150V and of duration 1/2f.

An analogue "pulser" circuit 112 is provided that is capable of generating the repeated trains of high voltage (50-150V) a.c. analogue signals (e.g. NGT pulses). Although the pulser 112 is provided, a more sophisticated digital waveform synthesizer could alternatively be employed to generate frequency or amplitude modulated waveforms to drive the piezo in more attenuating environments. The high voltage pulses generated by the pulser 112 effectively drive the piezoelectric active element 110 within the transducer of the pulse-echo ultrasound probe to output the required ultrasonic waveforms 150, but without exceeding the maximum voltage for such a thin fragile piezoelectric element. Each pulse activation may be instigated and precisely controlled in time by an enable signal sent to the "pulser" circuitry 112 from an FPGA 114 or equivalent processor. For every activation, a fast T/R switch 116 allows the device to instantaneously switch between the transmit mode and the longer duration receive mode during which time the system acquires and digitally records the acoustic response to the transmitted pulse measured by the reciprocal piezoelectric element 112.

It might be that the amplitude level of the received signals of interest can vary significantly. Accordingly, to try to deal with this a variable gain amplifier (VGA) 118 could optionally be provided to induce gain across the acquired A-scan response in order to amplify the signal prior to digital acquisition. Moreover, to equalise the variability within each A-scan response due to propagation loss or attenuation with some materials, a form of automatic gain control (AGC) known as distance-amplitude correction (DAC) may also be implemented. The amplified A-scan is then digitized using a suitably wide dynamic range (e.g. 12 bit) analogue-to-digital converter (ADC) 120 where sufficient over-sampling above the Nyquist rate is provided as the sample rate fundamentally effects the temporal resolution of the measurement system and thus the accuracy of the thickness measurement; e.g. a sampling rate of 125MHz or higher may be suitable for a 20MHz transducer. The encoded digital waveforms from the ADC 120 may also require band pass filtering using a digital filter, for example a low order FIR with a pass band matching the operating frequency of the transducer. The Tx-Rx electronics are designed so as to minimise all possible sources of electronic noise that may be observed within each individual A-scan. Such uncorrelated noise is most effectively suppressed by averaging across N successive repeated A-scan measurements (i.e. providing a theoretical √N SNR gain). As will be understood, averaging is not necessarily conducted during the below described calibration method.

As well as or instead of the above-mentioned AGC, due to the significantly different amplitude of the DL1 compared to other back wall (BW#) echoes as received by the pulse-echo ultrasound probe, the method can comprise changing the gain of the pulse-echo ultrasound probe, such that during the calibration of the pulse-echo ultrasound probe the gain is selected so as to ensure that at least the DL1 echo signal is not over-saturated, but such that during a subsequent object-inspection in which back wall echoes are used to determine information about the object, the gain is changed (e.g. increased) compared to its value during the calibration process, so as to increase the amplitude of the back wall echoes (at the expense of (potentially) over-saturating at least the DL1 echo).

The ultrasound transducer 110 (e.g. a piezo-electric element) is preferably (although not necessarily) located toward the distal end of the tube 104 (i.e. at the end near the deformable contact element 106). The other electronics can be located anywhere within the pulse-echo ultrasound probe, for example in the main body portion 102. Optionally, at least some of the other electronics could be located outside the pulse-echo ultrasound probe, for example at least partially in the controller 220.

As will be understood, pulse-echo ultrasound probe can have a mechanical axis 103 as well as an ultrasound axis 105. What the mechanical axis is will depend on the probe design. Typically, the mechanical axis of a probe is defined with respect to the probe's coordinate system. In this case, the probe is mounted on an articulated head, and the probe's coordinate system rotates with the probe as the probe rotates about an axis of the articulated head. In the case of the probe being mounted on an articulated head having two perpendicular axes of rotation, the X-axis of the probe's coordinate system can be aligned with one of the axes of the head (e.g. the E axis - illustrated in Figure 3) and the Z-axis of the probe's coordinate system can be aligned with the other of the axes (e.g. the D axis - illustrated in Figure 3). The Y axis completes a right-handed rectangular system, and for an axial probe, the mechanical axis is defined as the Z-axis (e.g. $^T$) of the probe coordinate system. For a crank-angled version of the probe, the mechanical axis is a specified constant Euler rotation from this Z-axis column vector. The ultrasound axis is defined as the direction in which the ultrasound travels in the probe coordinate system. It is a fixed vector within the probe's coordinate system, and so like the mechanical axis, it rotates with the probe as the probe rotates about an axis of the articulated head.

As schematically illustrated by Figure 1, it could be assumed that the L-wave axis is aligned with the mechanical axis 3 of the pulse-echo ultrasound probe 2, and therefore if the ultrasound probe contacts/engages the object with the mechanical axis normal to the front surface of object, then the L-wave axis will be projected into the part normal to the front surface of the object. Accordingly, if the pulse-echo ultrasound probe's ultrasound axis is defined as a unit column vector $v_{ua}$, fixed in probe coordinates, in an ideal situation where the probe's ultrasound axis is aligned with the probe's mechanical axis, $v_{ua}$ will be $[0\ 0\ 1]^T$.

However, it is very difficult to manufacture a pulse-echo ultrasound probe with the L-wave axis being perfectly aligned with the mechanical axis of the pulse-echo ultrasound probe. Rather, it is more than likely that the L-wave axis will be slightly misaligned with the mechanical axis of the pulse-echo ultrasound probe (e.g. by up to 2 to 3 degrees). Causes of misalignment include mechanical misalignment between the shaft and/or body and the transducer, and/or acoustic misalignment (e.g. where the ultrasound beam might not be perfectly symmetrical). Figure 6, schematically illustrates such a misalignment between the assumed L-wave axis (which is assumed to the same as the mechanical axis 103 shown in dotted-line) and calibrated L-wave axis 105 (shown in solid-line).

Even when a small misalignment exists between the assumed and calibrated L-wave axes, the performance of the ultrasound probe apparatus is compromised. In particular, the accuracy of measurements obtained from the ultrasound probe apparatus can be adversely affected by misalignment between the assumed and calibrated L-wave axes. Such misalignment complicates, and diminishes the amplitude of, the backwall echo(es).

For example, the distance travelled by the most intense highest amplitude L-wave will be greater than if the mechanical and ultrasonic axes were perfectly aligned and it would be a lower amplitude part of the projected L-wavefront that takes the shortest path between the front and backwalls. This will result in lower amplitude and potentially dispersed backwall echoes from which the thickness measurement is derived using signal processing algorithms that estimate the time-of-arrival or time-difference of arrival of these backwall echoes and this can significantly degrade measurement accuracy in such a high precision thickness measurement system (e.g. within 10 microns).

This problem is compounded due to refraction. That is, if the L-wave does not enter the object normal to the surface, then it will be refracted from the normal in accordance with Snells Law, the degree of refraction being dependent on the angle of incidence and the speed of sound within the deformable coupling element and the inspection object.

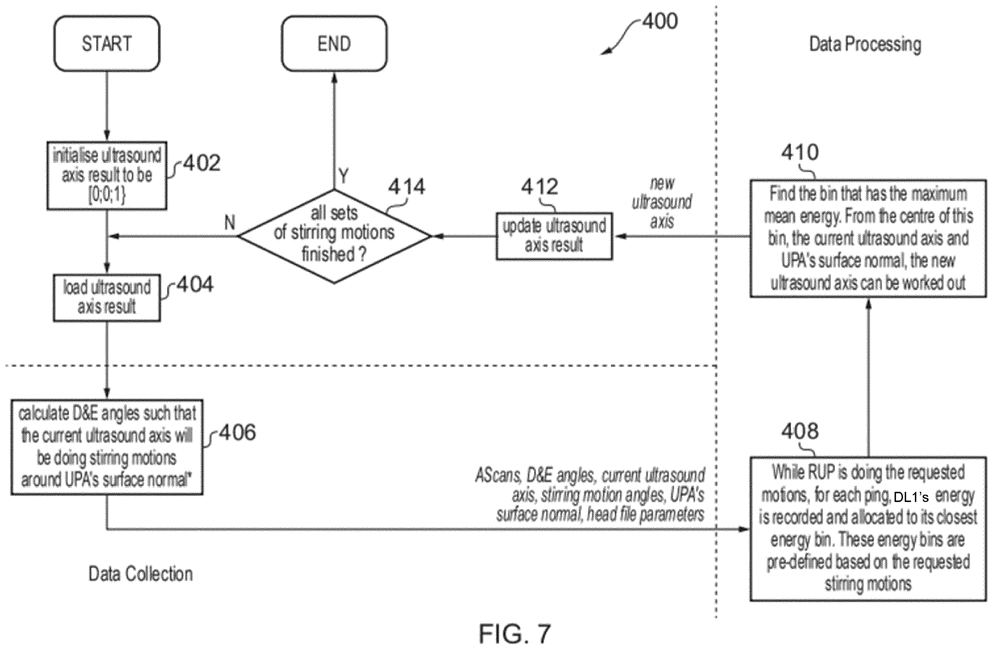

Such problems associated with misalignment between the mechanical/assumed axis and the calibrated L-wave axis can be significantly reduced by calibrating the pulse-echo ultrasound probe so as to find the L-wave axis and the present invention relates to an improved technique for calibrating the pulse-echo ultrasound probe. A method 400 of calibrating the pulse-echo ultrasound probe 100 in accordance with one example embodiment of the present invention will now be described with reference to the flow chart shown in Figure 7.

In summary, the calibration process involves loading the pulse-echo ultrasound probe onto the "front-wall"/"-interface" surface of an object and performing a plurality of orbital motions around the surface normal of the object whilst taking repeated pulse-echo measurements ("pinging") at a high rate to obtain an angular distribution of reflected interface echo signal strength information that indicates misalignment between the ultrasound and mechanical axes. In this particular embodiment described, two sets of orbital motions are performed; a first set for coarse measurement, and a second set for finer measurement (as explained in more detail below). Accordingly, in the embodiment described two iterations of the process shown in Figure 7 take place. However, as will be understood this need not necessarily be the case and only one (or more than two) iterations could take place. Furthermore, as will be understood, searching motions other than orbital motions could be performed.

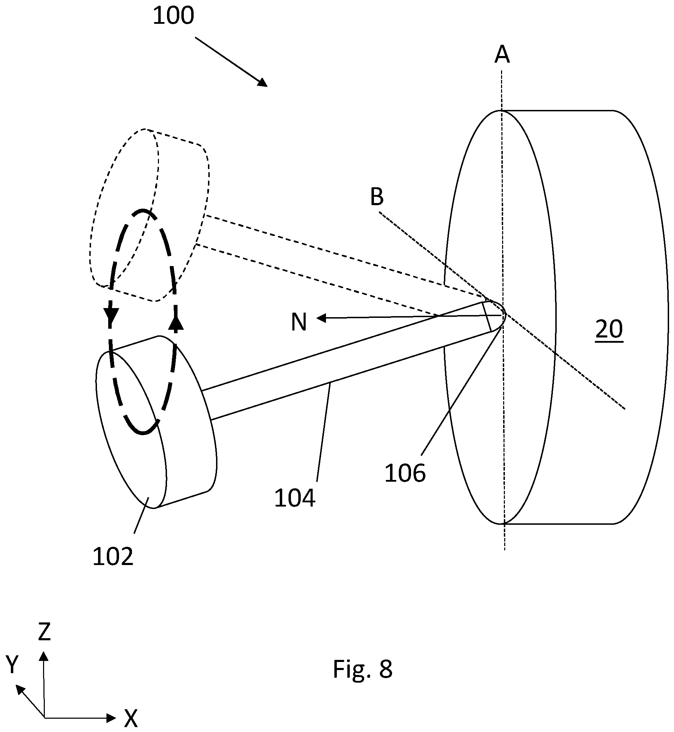

Turning briefly to Figure 8, this schematically illustrates an example path the pulse-echo ultrasound probe 100 might be caused to take during an orbital motion during a calibration method. In this embodiment, the calibration method is performed by way of the pulse-echo ultrasound probe 100 taking ultrasound measurements of a calibration object 20 (having pre-known dimensions and configuration). However, as will be understood, this need not necessarily be the case, and the same method could be used on a non-calibration object, for instance the object 10 that is to be inspected. Indeed, because the calibration method uses measures of the interface echo signal to determine the axis of optimum signal, the calibration method can be performed on objects even when the internal and/or backwall configuration is not known.

In Figure 8, the extent of the orbital motion has been exaggerated for the sake of illustration. Also, the articulated head 210 has been omitted for ease of illustration. As shown, the pulse-echo ultrasound probe 100 is controlled in a way which ensures that the coupling element 106 remains stationary on a single point of the object 20, whilst the main body 102 (and hence the current ultrasound axis) is moved about in a circle about the object's front-wall/interface surface's surface normal N. Such control could be achieved from knowledge of the length of the pulse-echo ultrasound probe, e.g. from prior calibration, and by achieving a known deflection of the deformable coupling element 106. As shown, a motion causes the tip (i.e. the coupling element) of the pulse-echo ultrasound probe to be rolled about two imaginary perpendicular axes A, B which extend perpendicular to surface normal N at the point of interaction between the pulse-echo ultrasound probe and the object 20. This enables data (e.g. interface echo signal information) in more than one dimension (with respect to the probe) to be obtained. Accordingly, information about the L-wave axis can be determined for more than one degree of freedom/dimension with respect to the pulse-echo ultrasound probe. As will be understood, synchronous rotation about the D and E axes (in a back-and-forth manner), as well as movement of the articulated head in the Z and Y axes (so that it is driven in a circular manner) will be required to effect such an orbital motion.

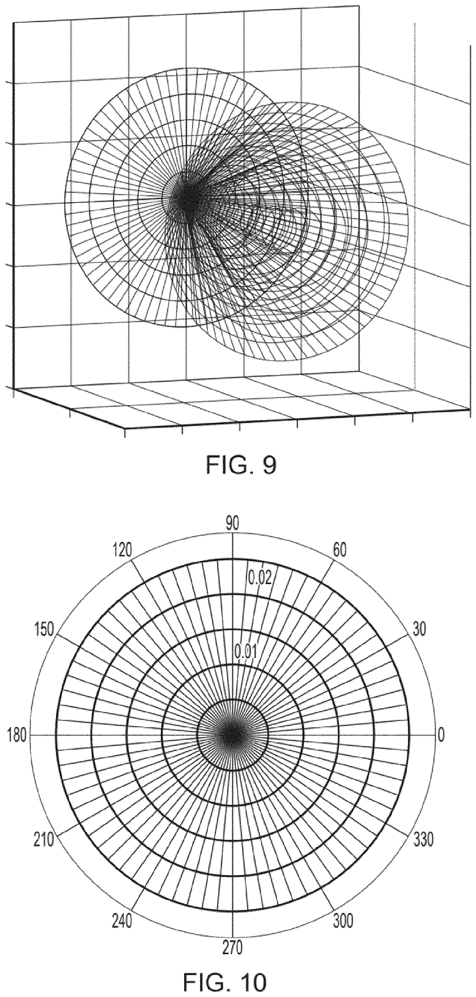

In the embodiment described, each set of orbital motions effectively forms a set of conical shapes. Figure 9 shows one set of cones (five) around a vector (shown as a black arrow) which represents the surface normal.

These two sets of cones essentially can be described as two sets of angles (between the surface normal and each cone). Table 1 below shows example angles that could be used:

*Table 1 - Angles that define conical shapes*

| Set # | Angle range | Angle step | Number of different angles | Angles |
|---|---|---|---|---|
| 1 | 0° to 1.25° | 0.25° | 6 | 0°, 0.25°, 0.50°, 0.75°, 1.00°, 1.25° |
| 2 | 0° to 0.4° | 0.04° | 11 | 0°, 0.04°, 0.08°, 0.12°, 0.16°, 0.20°, 0.24°, 0.28°, 0.32°, 0.36°, 0.40° |

Although not explicitly shown in the flow chart of Figure 7, as will be understood, the method could comprise obtaining data about the front-wall of the object 20. For example, the method could comprise measuring the position and orientation of the front wall of the object 20, e.g. with a position measurement probe, for example a touch-trigger probe. This so that the object's surface normal can be established, and so that the motions/orbits of the probe in the CMM coordinate system can be defined. In Figure 7, the object is referred to as "UPA" and the ultrasound pulse-echo probe is referred to as "RUP".

At the start of an ultrasound axis calibration, at step 402, the ultrasound axis result $v_{ua}$ is initialised to be $[0\ 0\ 1]^T$, and this is loaded into the controller at step 404. Accordingly, on the first iteration, $v_{ua}$ is set as if there is no misalignment, and (as explained in more detail below) on the second interaction, $v_{ua}$ is updated from the result of the first iteration to adjust for misalignment found during the first iteration.

Step 406 comprises determining how to control the CMM, in order to perform the orbital motions. This involves determining the D and E articulated head angles. As will be understood, the steps in an orbital motion can be defined with respect to a vector $v_{cmm}$ in CMM coordinates, and so the D and E articulated head angles need to be calculated so as to realise this vector (such that $v_{ua}$ is aligned to $v_{cmm}$). These D and E angles are then passed to the controller such that the controller can control the orientation of the pulse-echo ultrasound probe accordingly.

Whilst the pulse-echo ultrasound probe is carrying out an orbital motion, for each pulse-echo measurement (or "ping"), the A-scan and the D and E angles are recorded at step 408. At step 410, the data recorded from a set of orbital motions is processed, as described in more detail below, so as to determine a new $v_{ua}$. Thereafter, at step 412, $v_{ua}$ will get updated. At step 414 it is determined whether or not to repeat this process. In this case, the process is repeated because so far only the coarse measurements have been performed, and a second set of finer measurements are to be obtained.

Having two sets of orbital motions with different resolutions means that the ultrasound (e.g. L-wave) axis can be identified quickly and coarsely during the first set of motions, and then a much finer search around the result determined after the first set of motions, can be performed during the second set of motions. By doing so, a balance between calibration time and accuracy is well maintained. However, as will be understood, this does not necessarily have to be the case, and just one set of motions could be performed. As will also be understood, a search motion (e.g. orbital motion) can be interrupted before its completion if the local peak of interest has been found before the defined search path motion has completed.

As indicated above, the processing of the data at step 410 can happen in parallel while the pulse-echo ultrasound probe is "pinging" and performing the orbital motions. However, as will be understood this need not necessarily be the case, and for instance could be done after all of the orbital motions in a set have finished, for example.

In the embodiment described, for recording and processing purposes, energy bins with respect to the object's front surface are defined/used. Figure 10 schematically illustrates energy bins for the first set of orbital motions. Each spoke is 5° (this value is fixed across all sets of orbital motions) apart from its adjacent spokes, making the total number of spokes 72. Each circle is generated from radius as the sine value of the angles listed in the first row, last column in Table 1. In this embodiment, the energy bin map is a 2D map and the interface echo energy for the D and E angles are projected into the 2D map as described below. However, as will be understood, this need not necessarily by the case. For example, a 3D energy bin map could be used.

At step 408, for each ping, the interface echo energy is recorded and allocated to its closest energy bin, the process for which is explained in more detail in the following few paragraphs. In order to reduce susceptibility to noise, each orbital motion can be performed a number of times, with multiple results being stored in each bin and therefore each bin can represent a mean energy value. Also, the number of measurements used to get the result in each bin can be saved, such information being used to calculate the current updated averaged energy. Defining the resolution of the polar coordinate grid allows a discrete energy distribution map to be determined. However, as will be understood, the resolution of this map could be increased/improved after the empirically complied map has been populated using any well-established interpolation methods. It is also noted that noise that could be present within the measured distribution could be reduced or removed via post-process filtering or smoothing, thus potentially improving the reliability or accuracy of the extracted energy peak.

Extracting the interface echo energy for each ping can comprise extracting any suitable signal strength/quality indicator. Accordingly, extracting the interface echo energy for each ping can comprise extracting any suitable signal amplitude or integrated signal energy measure from the raw ultrasound A-scan signal measurement. Any signal metric related to the amplitude, the duration, the time-of arrival or the time-integrated energy of an interface echo signal can be used. For example, the peak amplitude of the envelope of the first-received interface echo signal can be extracted using the Hilbert transform or any other suitable demodulation technique, such as square-law detector, or Teager-Kaiser energy operation. This peak could be defined as the chosen energy metric of the interface echo signal at the D and E angles the ping occurred (which are reported by the controller). Using the recorded D and E angles, a vector $V_{cmm}$ (which is the vector of the direction that the ultrasound travels in the CMM coordinates) is then calculated, for example by a transformation such as that shown in equation 1.

$$v_{cmm} = R \times v_{ua} \qquad (1)$$

Where $R$ is a 3 by 3 rotation matrix, and where and $v_{ua}$ is the current ultrasound axis result, which is a column vector in probe coordinates.

Currently, the vector $v_{cmm}$ is a vector in 3D coordinates, and therefore $v_{cmm}$ is then projected onto a plane (e.g. the object's front surface) defined by the object's surface normal $v_{sn}$. A polar coordinate system on that plane is thereby defined. The pole is defined as the point where the cones intersect the plane. The polar axis $v_{polar}$ is defined as the projection of the first $V_{cmm}$ onto the plane. Each $v_{cmm}$'s projection point will be allocated to its nearest energy bin. In other words, the $V_{cmm}$ projection point is the point at which the $V_{cmm}$ vector intersects the plane. The closest energy bin to that projection point will be identified and the averaged energy in that bin will get updated.

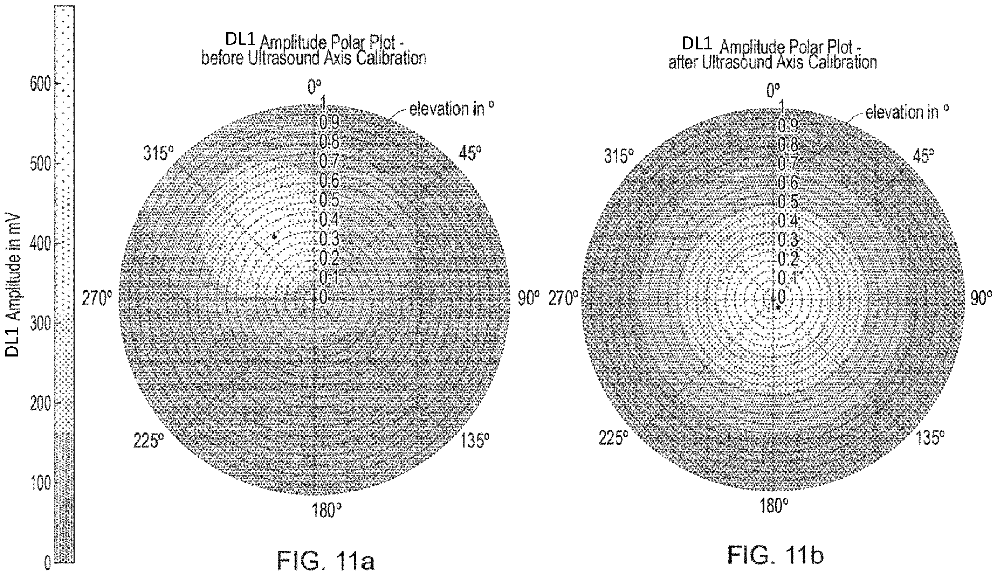

Figure 11a schematically illustrates an example interface echo signal energy distribution for a pulse-echo ultrasound probe 100 after a set of orbital motions has completed. As can be seen, for an uncalibrated probe, the highest averaged energy is not symmetrical, which is representative of the misalignment of the mechanical and L-wave axes. The map of Figure 11a is to be contrasted with the map of Figure 11b which has been obtained for a calibrated pulse-echo ultrasound probe (and for which the orbital motions took place about the calibrated L-wave axis). As will be understood, the calibrated map distribution of Figure 11b would be obtained from the calibrated pulse-echo ultrasound probe with the object 20 positioned at any location and orientation within the CMM volume. In the embodiment described, the interface echo energy distribution comprises a 2D map, defined with respect to the front surface of the object 20. As will be understood, this need not necessarily be the case, and for instance the energy bins could be defined in a 3D space.

After each set of orbital motion is finished, the energy bin which has the highest averaged energy will be identified. For example, i.e. its azimuth $\varphi_{max}$ and radius $r_{max}$ are identified. Then it will be translated from 2D to 3D and the result is a vector in CMM coordinates ($V_{max}$), representing the vector that gives the highest energy. Accordingly, once transformed, $v_{max}$, which is a vector in CMM coordinates, gives you the maximum energy. This itself then needs to be transformed into probe coordinates. Accordingly, the D and E angles are calculated, such that $v_{ua}$ is aligned to $v_{max}$. Next, based on the D and E angles, the rotation matrix $R^T$ from CMM coordinates to probe coordinates, is calculated. Then the updated ultrasound axis result $v_{ua\_new}$ (in probe coordinates) is calculated such that:

$$v_{ua\_new} = R^T \times v_{sn} \qquad (2)$$

Therefore, $v_{ua}$'s x and y components are now non-zero. In this case the angle between $v_{ua}$ and $[0\ 0\ 1]^T$ quantifies how misaligned the pulse-echo ultrasound probe is, while its x and y components indicate the direction of misalignment. Accordingly $v_{ua}$ provides a definition of the calibrated axis of the L-wave, in the probe's coordinate system.

If the pulse-echo ultrasound probe's L-wave is perfectly in alignment with its assumed axis (e.g. the probe's mechanical axis) or if it has already been correctly calibrated (i.e. the current Vua is correct), $V_{max}$ will be the same as/very close to object's surface normal. Otherwise, $V_{max}$ will deviate from the surface normal and based on these two vector values the current $V_{ua}$ can be updated so that it becomes a better representative ($V_{ua\_new}$) of the Ultrasound Axis (in probe coordinates).

Accordingly, in summary, the above process enables the calibrated axis of the L-wave to be determined by changing the relative orientation of the pulse-echo ultrasound probe and the object, and analysing the interface echo energy received at the different angular orientations. In the above embodiment, the pulse-echo ultrasound probe is moved in a circular, orbital fashion, which is repeated at a plurality of different angles with respect to the surface normal. However, as will be understood, this need not necessarily be the case, and other (for example iterative) processes for obtaining data on the interface echo energy for different angular orientations can be used. As will be understood, the search motions (i.e. the way in which the orientation of the probe is controlled) could follow any pattern and does not have to be circular/orbital motions. For instance, the pulse-echo ultrasound probe could be swung in a substantially back and forth manner (with the coupling element stationary on the object) to achieve similar measurement data. Also, rather than the data being stored/presented in a 2D map, the data obtained during a search/calibration procedure could be stored/presented in other ways. For example, measurement data could be recorded in a 1D array/plot/time series. Further, optionally, averaging does not necessarily have to be performed. For example, the method could comprise performing an N-iteration search using the maximum in the backwall time series, ending up with a descending "step-pattern" in the time-series on the Nth iteration.

Also, in alternative embodiments, the pulse-echo ultrasound probe could be retracted from the surface of the object, re-oriented and placed back on the surface of the object to take another measurement. Further still, although it can be advantageous for the pulse-echo ultrasound probe's coupling element to be stationary/reengage the same point for each measurement, this need not necessarily be the case, so long as the form of the front-wall of the object is known and taken into consideration in the processing.

If desired, interpolation and/or smoothing of energy maps to estimate the required peak energy vector can be used in order to reduce the number of actual measurements taken, thereby improving the speed of the calibration process.

Knowledge of the calibrated axis of the L-wave of the pulse-echo ultrasound ultrasound probe can be advantageous for a number of reasons. The calibrated pulse-echo ultrasound probe will more consistently return optimal backwall echoes and improve signal to noise ratio which inherently improves thickness measurement accuracy. In other words, knowledge of the calibrated axis of the L-wave of the pulse-echo ultrasound probe enables the pulse-echo ultrasound probe to be oriented so as to obtain the cleanest signal. For instance, for a given point on an object to be inspected (which may or may not be the same object which was used during the calibration process) there can be a desired propagation vector for the L-waves to propagate along within the object, and therefrom a target inspection axis/vector may be determined. The target vector can be determined based on the assumed/known geometry of the part, including the part's material properties and, as explained in more detail below, taking into consideration Snells law so that any expected refraction of the L-wave as it enters the object to be inspected can be compensated for. Once the target vector has been determined, it is possible, based on knowledge of the relationship between the pulse-echo ultrasound probe's L-wave and mechanical axes from the above mentioned calibration procedure, to calculate the D and E angles for the articulated head which will ensure that the L-waves propagate along the desired propagation vector within the object to be inspected.

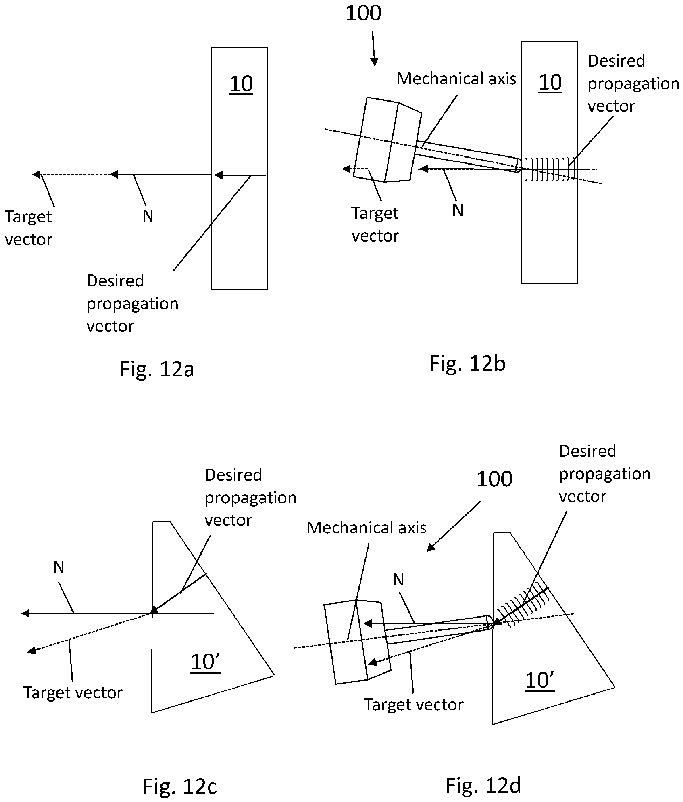

Taking the example shown in Figure 12a, for the desired propagation vector for the L-waves to propagate along within the object to be inspected, a target vector is determined, which in this case is perpendicular to the front-wall of the object being inspected. Accordingly, Figure 12b illustrates how that, based on knowledge of the relationship/misalignment between the pulse-echo ultrasound probe's L-wave and mechanical axes from the above mentioned calibration procedure, it is possible to determine how to orient the pulse-echo ultrasound probe in order to ensure that the L-waves propagate along the desired propagation vector within the object to be inspected.

As mentioned above, calculation of the target vector may take into consideration the effects of refraction as the L-wave enters the object to be inspected. For instance, if as shown in Figure 12c, the desired propagation vector is not perpendicular to the front wall, then the effect of refraction needs to be taken into consideration when determining the desired target vector. As shown in Figure 12c, on the basis of Snells law, it is predicted that the ultrasound wave will refract away from the surface normal N as it enters the object to be inspected 10'.

Accordingly, the Target vector is determined so as to take this into consideration. Then, based on knowledge of the L-wave axis from the above mentioned calibration procedure, the mechanical axis of the pulse-echo ultrasound probe is offset from the target vector to ensure that the L-waves propagate along the desired propagation vector within the object to be inspected. Therefore, the calibrated probe will also allow improved measurement of wedge geometries, where incident probe vectors predicted by Snells law will agree more closely with empirical discovery mode measurements.

As will be understood, in the case of Figure 12b and also in the case of Figure 12d, the mechanical axis of the pulse-echo ultrasound probe is offset from the target vector in a way which means that the pulse-echo ultrasound probe's calibrated L-wave axis is aligned with the target vector. In the case of Figure 12b where there is no refraction, the L-waves propagate within the object to be inspected along a vector that is aligned with the target vector (as illustrated). In the case of Figure 12d, the ultrasound probe's calibrated L-wave axis is aligned with the determined target vector, but due refraction (which was taken into consideration when determining the target vector), the L-waves will refract at the interface between the pulse-echo ultrasound probe's tip and the object to be inspected (i.e. the L-waves will refract at the front-wall/interface surface of the object), and therefore will propagate along the desired propagation vector within the object (which is not aligned with the target vector).

Even with a calibrated probe, it could be beneficial to search around the target vector to see if an even more optimum signal can be obtained. For example, it might be that the object being inspected is not a perfect part, and/or accurately predicting or measuring the effect of refraction could be difficult. Accordingly, the inspection apparatus could be configured so as to load the pulse-echo ultrasound probe onto the part such that the L-wave axis is initially aligned with the target vector, and then configured to search for a stronger backwall signal at different angular orientations. For instance, the apparatus could be controlled to perform a series of orbital motions, in a manner similar to that described above, and to analyse the backwall energies received to determine if there is another set of D and E angles which provide an even stronger backwall signal. With a pulse-echo ultrasound probe that has been calibrated according to the invention, the search can be more targeted than if the probe were not calibrated, thereby providing a speed benefit.

The embodiments described above describe using the ultrasound probe to measure the thickness of a part. As will be understood, ultrasound probes can be used for other purposes, such as detecting/measuring flaws in a part. The same calibration process can be used for calibrating an ultrasound probe which is to be used for flaw detection/measurement.

## Claims

1. A method of calibrating a pulse-echo ultrasound probe having a coupling element for contacting an object, in which the pulse-echo ultrasound probe and an object are provided on a positioning apparatus having at least one axis about which the relative orientation of the pulse-echo ultrasound probe and the object can be changed, the method comprising:

   i) at each of a plurality of different relative orientations between the pulse-echo ultrasound probe and the object about the at least one axis:

   • the pulse-echo ultrasound probe generates an ultrasound pulse, and
   • a measure is taken of an interface echo signal of the ultrasound pulse as received by the pulse-echo ultrasound probe, said interface echo signal being created by a reflection of the ultrasound pulse at the interface between the coupling element and the object; and

ii) using said measures of the interface echo signal to determine at least one calibration parameter, and recording the at least one calibration parameter for subsequent use.

2. A method as claimed in claim 1, in which i) comprises changing the relative orientation of the pulse-echo ultrasound probe and the object between said different relative orientations whilst the pulse-echo ultrasound probe's coupling element remains in contact with the object.

3. A method as claimed in claim 1 or 2, in which the position of the pulse-echo ultrasound probe's coupling element on the surface of the object is the substantially the same for each of the plurality of different relative orientations.

4. A method as claimed in any preceding claim, in which the positioning apparatus comprises at least two axes about which the relative orientation of the pulse-echo ultrasound probe and object can be changed, and in which i) comprises: at each of a plurality of different relative orientations between the pulse-echo ultrasound probe and the object about at least two of the at least two axes:

   • the pulse-echo ultrasound probe generates an ultrasound pulse, and
   • a measure is taken of an interface echo signal of the ultrasound pulse as received by the pulse-echo ultrasound probe.

5. A method as claimed in any preceding claim, comprising determining a map of measures of interface echo signals with respect to the relative orientation between the pulse-echo ultrasound probe and the object.

6. A method as claimed in any preceding claim, in which the coupling element is a deformable coupling element.

7. A method as claimed in any preceding claim, in which determining the at least one calibration parameter comprises using known information about the surface normal of the object at the point of measurement.

8. A method as claimed in any preceding claim, further comprising for a given point on an object to be inspected, determining a desired relative orientation of the pulse-echo ultrasound probe and object to be inspected.

9. A method as claimed in any preceding claim, in which the at least one calibration parameter is indicative of at least one axis of optimum signal of the pulse-echo ultrasound probe, for example is indicative of a longitudinal wave axis of the pulse-echo ultrasound probe.

10. A method as claimed in claim 9, further comprising for a given point on an object to be inspected, determining a desired inspection axis and using the at least one calibration parameter to determine a desired relative orientation of the ultrasound probe and object such that the axis of optimum signal and desired inspection axis are arranged in accordance with predetermined criteria, in particular, in which the predetermined criteria is that the axis of optimum signal and desired inspection axis are substantially aligned.

11. A method as claimed in claim 8 or 10, comprising bringing the pulse-echo ultrasound probe coupling element into contact with said point on the object to be inspected, in accordance with the desired relative orientation of the pulse-echo ultrasound probe and object to be inspected.

12. A method as claimed in claim 11, comprising subsequently changing the relative orientation of the pulse-echo ultrasound probe and object to be inspected about at least one axis to determine if a more optimum signal can be found at a different orientation.

13. A method as claimed in any preceding claim, wherein said measure comprises one or more of the: amplitude, duration, time-of arrival, and the time-integrated energy of an interface echo signal.

14. A method as claimed in any preceding claim, wherein the measure of an interface echo signal is the only echo measurement used in the determination of the at least one calibration parameter.

15. A method as claimed in claim 14, in which the measure of the first-received interface echo signal is the only echo measurement used in the determination of the at least one calibration parameter.

Fig. 1

Fig.2

Fig. 3

Fig. 4

Data Capture + Comms Interface

A-scans

Control

COMMS

114

Data

120

118

116

112

150

110

Fig. 5

100

10

103

105

Z

X

Fig. 6

EP 4 707 732 A1

START

END

Data Processing

*400*

initialise ultrasound axis result to be {0;0;1} —402

Y

414

412

*new ultrasound axis*

410

Find the bin that has the maximum mean energy. From the centre of this bin, the current ultrasound axis and UPA's surface normal, the new ultrasound axis can be worked out

N

all sets of stirring motions finished ?

update ultrasound axis result

load ultrasound axis result —404

calculate D&E angles such that the current ultrasound axis will be doing stirring motions around UPA's surface normal* —406

408

*AScans, D&E angles, current ultrasound axis, stirring motion angles, UPA's surface normal, head file parameters*

While RUP is doing the requested motions, for each ping, DL1's energy is recorded and allocated to its closest energy bin. These energy bins are pre-defined based on the requested stirring motions

Data Collection

FIG. 7

100

A

B

N

20

106

104

102

Z

Y

X

Fig. 8

FIG. 9

FIG. 10

FIG. 11a

FIG. 11b

100

Mechanical axis

Desired propagation vector

10

10

Target vector

N

Desired propagation vector

Fig. 12a

Target vector

N

Fig. 12b

Desired propagation vector

Mechanical axis

100

Desired propagation vector

N

N

10'

Target vector

Target vector

10'

Fig. 12c

Fig. 12d

Europäisches
Patentamt

European
Patent Office

Office européen
des brevets

# EUROPEAN SEARCH REPORT

**Application Number**

EP 24 27 5102

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2020/174214 A1 (RENISHAW PLC [GB]) 3 September 2020 (2020-09-03) * the whole document * ----- | 1-15 | INV. G01B17/06 G01B21/04 G01N29/26 G01N29/30 |
| A | CN 108 562 651 A (CHANGCHUN INST TECH) 21 September 2018 (2018-09-21) * Summary of the Invention; figures 1-2 * ----- | 1-15 | |
| A | DE 28 24 629 A1 (WESTINGHOUSE ELECTRIC CORP) 21 December 1978 (1978-12-21) * the whole document * ----- | 1-15 | |

| | |
|---|---|
| | **TECHNICAL FIELDS SEARCHED (IPC)** |
| | G01B G01N |

The present search report has been drawn up for all claims

| Place of search | Date of completion of the search | Examiner |
|---|---|---|
| Munich | 28 January 2025 | Gomez, Adriana |

EPO FORM 1503 03.82 (P04C01)

## ANNEX TO THE EUROPEAN SEARCH REPORT
## ON EUROPEAN PATENT APPLICATION NO.

EP 24 27 5102

28-01-2025

| Patent document cited in search report | | Publication date | Patent family member(s) | | Publication date |
|---|---|---|---|---|---|
| WO 2020174214 | A1 | 03-09-2020 | CN | 113544463 A | 22-10-2021 |
| | | | EP | 3702726 A1 | 02-09-2020 |
| | | | EP | 3931526 A1 | 05-01-2022 |
| | | | JP | 7499781 B2 | 14-06-2024 |
| | | | JP | 2022522353 A | 18-04-2022 |
| | | | US | 2022137005 A1 | 05-05-2022 |
| | | | WO | 2020174214 A1 | 03-09-2020 |
| CN 108562651 | A | 21-09-2018 | NONE | | |
| DE 2824629 | A1 | 21-12-1978 | DE | 2824629 A1 | 21-12-1978 |
| | | | ES | 470655 A1 | 16-10-1979 |
| | | | FR | 2394152 A1 | 05-01-1979 |
| | | | GB | 1584946 A | 18-02-1981 |
| | | | IL | 54667 A | 20-05-1981 |
| | | | JP | S547096 A | 19-01-1979 |
| | | | YU | 122478 A | 29-02-1984 |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5189806 A
- WO 2009024783 A
- GB 2440959 A
- US 20090178482 A
- WO 2016051147 A
- WO 2020174214 A
- WO 2016051148 A